# EUROPEAN PATENT SPECIFICATION

(11) **EP 2 344 940 B1**
(45) Date of publication and mention of the grant of the patent: **22.10.2014**
(21) Application number: 09779050.5
(22) Date of filing: 13.02.2009
(51) Int. Cl.: G06F 1/16, G06F 3/02, H01H 13/83

(54) **ARRANGEMENT FOR SELECTIVELY VIEWING AND HIDING USER INTERFACE ITEMS ON A BODY OF A COMMUNICATION APPARATUS, AND COMMUNICATION APPARATUS COMPRISING SUCH ARRANGEMENT**
ANORDNUNG ZUM SELEKTIVEN BETRACHTEN UND VERSTECKEN VON BENUTZEROBERFLÄCHENPOSTEN AUF EINEM KÖRPER EINER KOMMUNIKATIONSVORRICHTUNG UND EINE SOLCHE ANORDNUNG UMFASSENDE KOMMUNIKATIONSVORRICHTUNG
SYSTÈME PERMETTANT DE VISUALISER ET DE CACHER DE FAÇON SÉLECTIVE DES ÉLÉMENTS D'INTERFACE UTILISATEUR SUR LE CORPS D'UN APPAREIL DE COMMUNICATION, ET APPAREIL DE COMMUNICATION ÉQUIPÉ DE CE SYSTÈME

(30) Priority: 13.08.2008 US 190717
(43) Date of publication of application: 20.07.2011
(73) Proprietor: Sony Ericsson Mobile Communications AB, 221 88 Lund (SE)
(72) Inventor: JOHANSSON, Sandra, S-112 52 Stockholm (SE)
(74) Representative: Banzer, Hans-Jörg
(86) International application number: PCT/EP2009/051704
(87) International publication number: WO 2010/018004

(56) References cited:
- WO-A-00/17900
- WO-A-98/01876
- WO-A-2007/056289
- DE-A1- 10 307 473
- US-A- 4 786 767

## Description

### Technical field

The present invention relates to an arrangement for selectively viewing and hiding user interface items on a body of a communication apparatus, and a communication apparatus comprising such arrangement.

### Background

Electronic apparatuses, and especially portable apparatuses such as mobile phones, personal digital assistants, portable media players, etc., often require some tricks in design of user interface due to their limited size, especially when taken into account the often large number of functions that is to be controlled. Also design constraints in sense of ergonomics and looks make the task of providing a user interface even harder. One way of dealing with the problem is to have adaptive user interface, i.e. the user interface looks different for different applications run on the apparatus or states of the operation of the apparatus. An example how this can be done is presented in WO 2007/107824 A1, where a touch sensitive display of the apparatus is used for providing a set of virtual keys, and wherein further sub-sets of keys are provided depending on different states of operation and depending on the application that is run on the apparatus. However, this approach requires a touch sensitive display, and it also takes at least a significant amount of the display area into account. It is therefore a desire to provide an alternative user interface approach taking the above stated design constraints into account.

WO 00/17900 A1 discloses a key pad that can be selectively shown or hidden on a body of a communication device. The keys become visible through a tinted, semi-transparent layer of the body when being back illuminated by a light source arranged inside the body of the device. If the light source is switched off, the tinted layer absorbs the ambient light, thus hiding the underlying arrangement from being visible. However, because also the light transmission of the light source is partly absorbed by the tinted layer, a relatively high operating power is required for the light source to generate enough light for sufficiently illuminating the keys.

US 4,786,767 A discloses a transparent touch panel membrane switch for use and shielding in front of a visual display terminal. Superior performance in such switches can be achieved by substantially increasing their absorption and thus substantially reducing the signal which they emit. The absorption can be increased by imparting circular polarization properties to a thin-film absorption coating.

WO 98/01876 A1 discloses a keyboard with multi-function keys and changeable labelling facility e.g. for mobile telephone. The surface of the key is divided into two parts with which two different labels are associated. The key includes a selective lighting element for lighting either part. The selective lighting element includes two polarizing filters whose polarization planes are normal and which are associated with the key opposite the parts. Two light sources each respectively emit a polarized light in one of the planes and are selectively lit for lighting the key.

WO 2007/056289 A1 provides a Liquid Crystal Display (LCD) including a planar array of transmissive LCD devices, and at least one laser diode device spaced apart from the planar array of LCD devices and configured to illuminate at least a subset of the LCD devices of the planar array of LCD devices, such that, in operation, the laser diode device provides backlighting for the subset of LCD devices of the planar array of LCD devices.

DE 103 07 473 A1 provides an input device for electrical installation that may be incorporated into a wall without making a disturbing appearance. The input device comprises a display having a transparent plate and a cover layer locates in front of the plate. The display can be activated by a light source, the display being visible through the cover layer only in its activated state.

### Summary

The present invention provides an arrangement for selectively viewing and hiding user interface items on a body of a communication apparatus as defined in claim 1. The dependent claims define preferred embodiments of the invention. It is a purpose to provide an improved approach for an adaptive user interface. The present invention is based on the understanding that an area of a body of the apparatus can be used as a user interface item such as a key, button, or indicator by projection of light from the interior of the apparatus through a translucent body shell. The pattern of the light can be used for forming the user interface item. The present invention is further based on the understanding that incident light towards the apparatus may be reflected such that the user interface item is not hidden although it is not active, which may confuse a user, unless remedied by the features of the present invention where these unwanted reflections are strongly attenuated by introducing a polarizing layer.

According to a first aspect, there is provided an arrangement for selectively viewing and hiding user interface items on a body of a communication apparatus. The arrangement comprises a light source arranged inside the body and arranged to project light towards a surface of the body such that when the light source is in an on-state, the user interface item is viewable on the surface of the body; and a polarizing layer arranged with the surface of the body at least where the user interface item is to be viewed, such that the surface there, when the light source is in an off-state the user interface item is hidden, wherein light that the light source project is polarized light arranged in a polarization direction such that the light paner the polarizing layer, and wherein the light source comprises a laser diode.

The user interface item may be a button. The button may be a touch button.

The arrangement may further comprise a mask for defining a pattern of the user interface item.

According to a second aspect, there is provided a communication apparatus comprising a user interface, wherein the user interface comprises an arrangement according to the first aspect.

### Brief description of drawings

Figs 1a and 1b illustrate a communication apparatus according to an embodiment.
Fig. 2 illustrates a sectional view for illustrating unwanted reflections.
Fig. 3 illustrates a sectional view for illustrating attenuation of unwanted reflections according to an embodiment.
Fig. 4 illustrates a sectional view for illustrating a light source in active state according to an embodiment.
Fig. 5 illustrates a sectional view for illustrating a light source in active state according to an embodiment.

### Detailed description

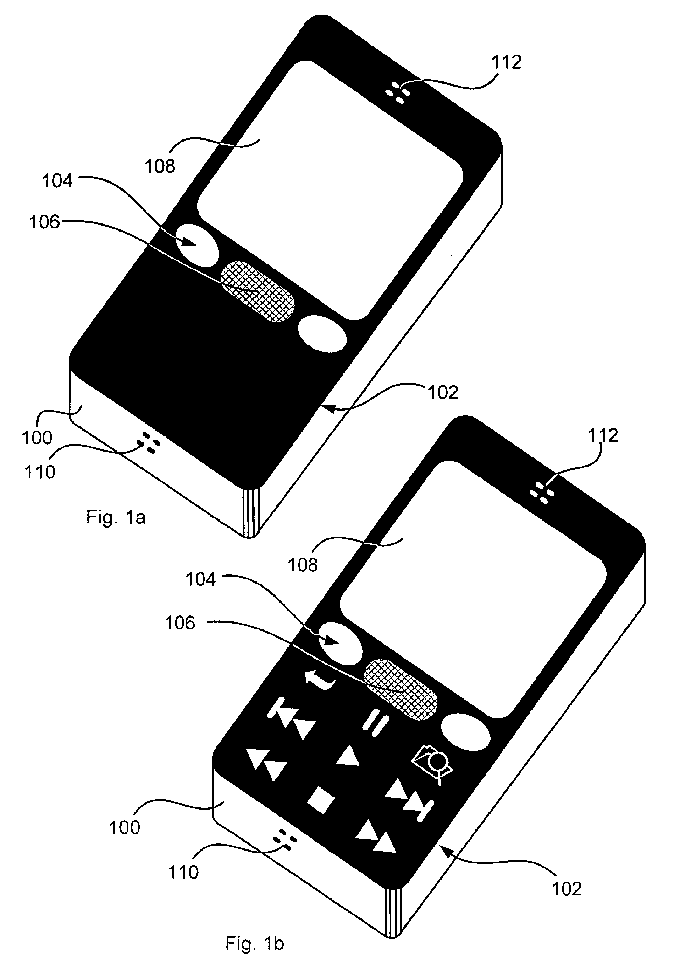

Figs 1a and 1b illustrates a communication apparatus 100 having a user interface including user interface items 102 that can be selectively hidden, where Fig. 1a illustrates a state where these user interface items are hidden and Fig. 1b illustrates a state where these user interface items are viewed. The surface where they can be viewed looks like any body surface of the communication apparatus when in the state as illustrated in Fig. 1a, i.e. having a primary color and possible pattern of the body, while when in the state as illustrated in Fig. 1b, the user interface items 102 are projected from the interior of the communication apparatus 100 such that they are viewed on the surface of the body.

The user interface items 102 can be buttons or keys, which preferably are of touch type, i.e. of the type where a force or electric load is sensed by a force sensor or capacitive sensor, respectively, such that when the user interface item 102 is active and visible, the user can tap or touch the body surface where the user interface item 102 is viewed to actuate its associated function. The function can for example, as illustrated in Fig. 1b, be playback and navigation control for a media player. These controls are preferably activated, and thus viewed, when a media player application is active. When that application is inactive, the controls are invisible. There can be several sets of such user interface items, each associated with its respective application. In addition to this, the communication apparatus can also have permanent keys 104, as illustrated in Figs 1a and 1b, and a navigation input such as joystick or jog-dial 106, a display 108, a microphone 110, a speaker 112, etc.

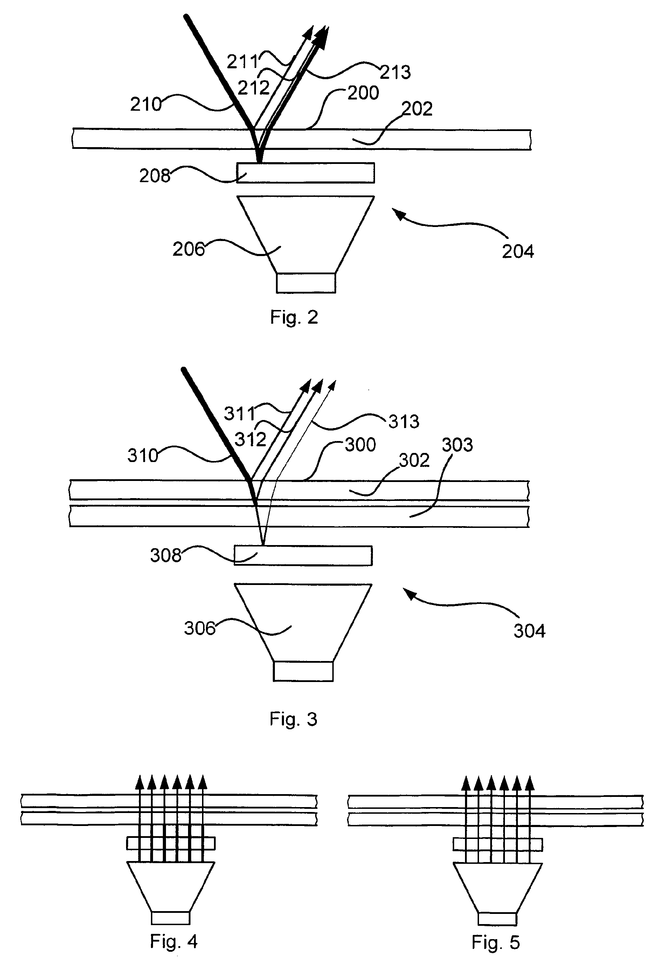

As discussed above, there are problems of achieving this effect with prior art solutions. For the understanding of the invention, Fig. 2 illustrates a sectional view of a body surface 200 of a part of a body 202, e.g. a casing of a communication apparatus. The body 202 is, at least at those parts where the user interface items are to be viewed, made of any translucent material. An arrangement 204 for projection of the user interface item on the body surface 200 is arranged in the interior of the communication apparatus. The arrangement 204 comprises for example a light source 206 and a mask 208 through which the light source projects its light towards the body surface 200 such that a pattern defined by the mask 208 is formed as an illuminated pattern making the user interface item viewable on the body surface when the light source is active. When the light source is deactivated, there should be no user interface viewable on the body surface, but due to incident light, as illustrated by arrowed line 210, an image of the arrangement 204 will be visible anyway. For the understanding of this, an explanation of propagation of the incident light 210 will be elucidated. The incident light 210 will be both reflected in the body surface 200, resulting in a first reflection 211, and refracted in the body 202. A second reflection will also be provided in the interior surface of the body 202, resulting in a second reflection 212. However, a large amount of the incident light 210 will be refracted towards the arrangement 204 due to the translucent properties of the body 202. The refracted light will be reflected in the arrangement 204, resulting in a third reflection 213, which will give an image of the arrangement that is viewable on the body surface 200 although the light source is in an off-state and the user interface item is intended to be invisible. The invention at least alleviates this as will be elucidated below.

Fig. 3 illustrates a similar view as Fig. 2, but with the approach of the invention employed. A body surface 300 of a part of a body 302, e.g. a casing of a communication apparatus, is illustrated. The body 302 is, at least at those parts where the user interface items are to be viewed, made of any translucent material together with a polarizing layer 303. The polarizing layer is here illustrated slightly separated from the body layer 302 for the sake of more clearly illustrating the features of the invention. However, the polarizing layer 303 can be arranged as illustrated or in direct contact with the body layer, below or above the body layer, or be integrated with the body layer. An arrangement 304 for projection of the user interface item on the body surface 300 is arranged in the interior of the communication apparatus. The arrangement 304 comprises for example a light source 306 and a mask 308 through which the light source projects its light towards the body surface 300 such that a pattern defined by the mask 308 is formed as an illuminated pattern making the user interface item viewable on the body surface when the light source is active. When the light source 306 is deactivated, incident light, as illustrated by arrowed line 310 will be both reflected in the body surface 300, resulting in a first reflection 311, and refracted in the body 302. A second reflection 312 will also be provided in the interior surface of the body 302. However, a large amount of the incident light 310 will be refracted towards the polarizing layer 303. Considering the incident light as having no particular polarization, only about half of the light will propagate towards the arrangement 304 due to the polarizing properties of the polarizing layer 303. The refracted light will be reflected in the arrangement 304, resulting in a third reflection 313, which will propagate towards the polarizing layer 303, where it is further attenuated whereby the third reflection 313 has a greatly reduced intensity. In theory, the third reflection 313 will still give an image of the arrangement 304 on the body surface 300, but due to its reduced intensity, especially compared to the first and second reflections 311, 312, a viewer will not notice the image. Thus, when the light source is in an off-state, the user interface item will in practice be invisible.

Fig. 4 illustrates a similar view as Fig. 3, but with the light source in an on-state. Considering that the light source provides unpolarized light, there will be about half of the light that is not transmitted through the polarizing layer. For some applications, this is no problem. However, if a light source providing polarized light arranged in a polarization direction such that the light passes the polarizing layer, as illustrated in Fig. 5, power can be saved for the light source. Further advantages can be reduced temperature, and/or better definition of the user interface items due to less scattering. The light source can for example be a laser diode providing polarized light.

## Claims

1. An arrangement for selectively viewing and hiding user interface items (102) on a body of a communication apparatus (100), the arrangement comprising
a light source (206; 306) arranged inside the body (202; 302) and arranged to project light towards a surface (200; 300) of the body (202; 302) such that when the light source (206; 306) is in an on-state, the user interface item is viewable on the surface of the body (202; 302);
a polarizing layer (303) arranged with a body layer of the body (202; 302) at least where the user interface item (102) is to be viewed, such that, when the light source (206; 306) is in an off-state, the user interface item (102) is hidden;
wherein light that the light source (206; 306) projects is polarized light arranged in a polarization direction such that the light passes the polarizing layer (303), and
wherein the light source (206; 306) comprises a laser diode.

2. The arrangement according to claim 1, wherein the user interface item (102) is a button.

3. The arrangement according to claim 2, wherein the button is a touch button.

4. The arrangement according to any claims 1 to 3, further comprising a mask (208; 308) for defining a pattern of the user interface item (102).

5. A communication apparatus (100) comprising a user interface, wherein the user interface comprises an arrangement according to any one of claims 1-4 for selectively viewing and hiding user interface items (102) on a body (202; 302) of the communication apparatus (100).

## Patentansprüche

1. Anordnung zum selektiven Betrachten und Verbergen von Benutzerschnittstellenelementen (102) auf einem Körper einer Kommunikationsvorrichtung(100), wobei die Anordnung umfasst
eine Lichtquelle (206; 306), die innerhalb des Körpers (202; 302) angeordnet ist, und angeordnet ist, Licht zu einer Oberfläche (200; 300) des Körpers (202; 302) hin zu projizieren, sodass das Benutzerschnittstellenelement auf der Oberfläche des Körpers (202; 302) betrachtbar ist, wenn die Lichtquelle (206; 306) in einem eingeschalteten Zustand ist;
eine Polarisationsschicht (303), die mit einer Körperschicht des Körpers (202; 302) mindestens dort angeordnet ist, wo das Benutzerschnittstellenelement (102) zu betrachten ist, sodass das Benutzerschnittstellenelement (102) verborgen ist, wenn die Lichtquelle (206; 306) in einem ausgeschalteten Zustand ist;
wobei Licht, das die Lichtquelle (206; 306) projiziert, polarisiertes Licht ist, das in einer Polarisationsrichtung derart angeordnet ist, dass das Licht durch die Polarisationsschicht (303) hindurchgeht, und
wobei die Lichtquelle (206; 306) eine Laserdiode umfasst.

2. Anordnung nach Anspruch 1, wobei das Benutzerschnittstellenelement (102) eine Taste ist.

3. Anordnung nach Anspruch 2, wobei die Taste eine Berührungstaste ist.

4. Anordnung nach einem der Ansprüche 1 bis 3, weiterhin umfassend eine Maske (208; 308) zur Definition eines Musters des Benutzerschnittstellenelements (102).

5. Eine Kommunikationsvorrichtung (100), umfassend eine Benutzerschnittstelle, wobei die Benutzerschnittstelle eine Anordnung nach einem der Ansprüche 1 bis 4 zum selektiven Betrachten und Verbergen von Benutzerschnittstellenelementen (102) auf einem Körper (202; 302) der Kommunikationsvorrichtung (100) umfasst.

## Revendications

1. Agencement pour visualiser et cacher de manière sélective des éléments d'interface utilisateur (102) sur un corps d'un appareil de communication (100), l'agencement comprenant
une source de lumière (206 ; 306) agencée à l'intérieur du corps (202 ; 302) et agencée de manière à projeter de la lumière vers une surface (200 ; 300) du corps (202 ; 302) de sorte que lorsque la source de lumière (206 ; 306) est dans un état activé, l'élément d'interface utilisateur soit visible sur la surface du corps (202 ; 302) ;
une couche de polarisation (303) agencée avec une couche de corps du corps (202 ; 302) au moins à l'endroit où l'élément d'interface utilisateur (102) doit être visible, de sorte que, lorsque la source de lumière (206 ; 306) est dans un état désactivé, l'élément d'interface utilisateur (102) soit caché ;
dans lequel la lumière que la source de lumière (206 ; 306) projette est une lumière polarisée agencée dans une direction de polarisation de sorte que la lumière traverse la couche de polarisation (303), et
dans lequel la source de lumière (206 ; 306) comprend une diode laser.

2. Agencement selon la revendication 1, dans lequel l'élément d'interface utilisateur (102) est un bouton.

3. Agencement selon la revendication 2, dans lequel le bouton est un bouton tactile.

4. Agencement selon l'une des revendications 1 à 3, comprenant en outre un masque (208 ; 308) pour définir un motif de l'élément d'interface utilisateur (102).

5. Appareil de communication (100) comprenant une interface utilisateur, dans lequel l'interface utilisateur comprend un agencement selon l'une quelconque des revendications 1 à 4 pour visualiser et cacher de manière sélective des éléments d'interface utilisateur (102) sur un corps (202 ; 302) de l'appareil de communication (100).
